# EUROPÄISCHE PATENTANMELDUNG

(11) **EP 1 391 627 A2**
(43) Veröffentlichungstag der Anmeldung: **25.02.2004**
(21) Anmeldenummer: 02023951.3
(22) Anmeldetag: 25.10.2002
(51) Int. Cl.: F16D 43/16

(54) **Kupplungseinrichtung**

(30) Priorität: 22.08.2002 US 226084
(71) Anmelder: Walter Perske GmbH, 68167 Mannheim (DE)
(72) Erfinder: Campbell, Robert L., Jr., Hickory, NC 28601 (US); Moran, Kevin E., Bellmont, NC 28012 (US)
(74) Vertreter: Naumann, Ulrich, Dr.-Ing.

(57) **Zusammenfassung**

Eine Kupplungseinrichtung zur drehfesten Kupplung eines auswechselbaren Werkzeugträgers (7) an der Welle (2) eines Motors (1), wobei die Welle (2) an ihrem abtriebsseitigen Ende einen Hohlwellenansatz (3) zur Aufnahme des Werkzeugträgers (7) aufweist oder der Werkzeugträger einen Hohlwellenansatz zur Aufnahme des abtriebsseitigen Endes der Welle aufweist und wobei die Welle (2) und/oder der Werkzeugträger eine Verriegelungseinrichtung zur Sicherung des Werkzeugträgers (7) aufweist, ist im Hinblick auf ein einfacheres Einsetzen auch schwerer Werkzeuge und eine zuverlässige Verbindung von Werkzeug und Antrieb derart ausgebildet, daß die Verriegelungseinrichtung zentrifugalkraftbetätigt ist.

## Beschreibung

Die Erfindung betrifft eine Kupplungseinrichtung zur drehfesten Kupplung eines auswechselbaren Werkzeugträgers an der Welle eines Motors, wobei die Welle an ihrem abtriebsseitigen Ende einen Hohlwellenansatz zur Aufnahme des Werkzeugträgers aufweist oder der Werkzeugträger einen Hohlwellenansatz zur Aufnahme des abtriebsseitigen Endes der Welle aufweist und wobei die Welle und/oder der Werkzeugträger eine Verriegelungseinrichtung zur Sicherung des Werkzeugträgers umfasst.

Eine bekannte Kupplung rotierend betriebener Werkzeuge mit der Welle eines Motors sieht an einem Schaft des Werkzeugs einen Konus vor, der in einen zugeordneten Innenkonus am Abtrieb der Welle eingesteckt wird. Durch Eindrücken des Konus in den Innenkonus wird eine Presspassung erzeugt, die die Kraftübertragung von der Welle auf das Werkzeug ermöglicht. Allerdings erweist sich bei derartigen Kupplungen das Lösen des Konus aus dem Innenkonus gegen den Widerstand der Presspassung als sehr beschwerlich.

Es sind außerdem einfache Kupplungseinrichtungen, z.B. für handgeführte Kleinbohrmaschinen, bekannt, die in einer konischen Hohlwelle ein aus mehreren Backen bestehendes und auf seiner Umfangsfläche ebenfalls konisches Futter aufweisen, das in die Hohlwelle eingesetzt wird. Auf die konische Hohlwelle ist eine durchbrochene Überwurfmutter aufschraubbar, durch deren Anziehen das Futter in die Hohlwelle eingeschoben und die Backen gegeneinander verspannt werden. Ein in das Futter einsetzbares Werkzeug kann auf diese Weise drehfest mit dem Abtrieb der Bohrmaschine verbunden werden.

Es hat sich jedoch gezeigt, dass sich diese Kupplungseinrichtungen zum einen hinsichtlich des Einsetzen eines Werkzeugs oder beim Werkzeugwechsel als wenig komfortabel und zeitaufwändig erweisen, weil dafür viele Handgriffe notwendig sind. Daher sind solche Kupplungen nicht ohne weiteres auf größere Maschinen und schwere Werkzeuge übertragbar. Zum anderen aber stellen diese Kupplungseinrichtungen keine dauerhafte Verbindung zwischen Werkzeug und Abtrieb dar, weil sich die Schraubverbindung in Folge von Erschütterungen während des Bearbeitungsprozesses löst und damit das Werkzeug freigibt. Vor allem bei schnell rotierenden Werkzeugen stellt dies ein erhebliches Sicherheitsrisiko dar.

Der vorliegenden Erfindung liegt daher die Aufgabe zugrunde, eine Kupplungseinrichtung anzugeben, die ein schnelles Einsetzen auch schwerer Werkzeuge ermöglicht und zugleich eine zuverlässige Verriegelung des Werkzeugs am Antrieb gewährleistet.

Erfindungsgemäß wird die voranstehende Aufgabe durch eine Kupplungseinrichtung mit den Merkmalen des Patentanspruchs 1 gelöst. Demnach ist die in Rede stehende Kupplungseinrichtung derart ausgestaltet und weitergebildet, dass die Verriegelungseinrichtung zentrifugalkraftbetätigt ist.

In erfindungsgemäßer Weise ist erkannt worden, dass in Abkehr von bisherigen Konstruktionsprinzipien, die eine Verriegelung überwiegend aufgrund separat aufgebrachter Kräfte erzeugen, bei drehbewegten Körpern die ohnehin auftretenden Fliehkräfte zur Verriegelung genutzt werden können. Damit erübrigt sich das Aufbringen einer zusätzlichen Kraft zum Zwecke der Verriegelung, was dem Gerätebenutzer zusätzliche Handgriffe und Zeit erspart.

Nach einer vorteilhaften Ausgestaltung der Erfindung könnte die Verriegelungseinrichtung mindestens einen Verriegelungskörper umfassen, der infolge der beim Drehen auftretenden Zentrifugalkräfte mit einem Anschlußteil am Werkzeugträger und/oder an der Welle in arretierenden Eingriff bringbar ist. Dazu könnte sie einen Verriegelungskörper aufweisen, dessen Massenschwerpunkt bezüglich der Rotationsachse der Antriebswelle exzentrisch angeordnet ist, und der somit beim Einsetzen der Drehbewegung nach außen strebt. Damit wäre es möglich, dass die Verriegelung zwischen Anschlussteil und Hohlwellenansatz unmittelbar mit Einsetzen der Drehung selbsttätig hergestellt wird. So kann nicht nur Bedienaufwand zur Herstellung der Verriegelung eingespart, sondern zusätzlich auch eine mögliche Fehlerquelle infolge einer Fehlbedienung ausgeschlossen werden.

Vor allem bei Werkzeugmaschinen mit schnelldrehenden Werkzeugen wird der Arbeitssicherheit allerhöchste Priorität eingeräumt. Bei der Konstruktion von Werkzeugmaschinen, die gegen ungewollte Kollision eines Werkstücks oder eines Bedieners mit dem Werkzeug nicht gekapselt werden können, weil sie zur Bearbeitung von Werkstücken notwendigerweise zumindest teilweise frei zugänglich sein müssen, ist daher ganz besonders darauf zu achten, dass von den schnellrotierenden Werkzeugen keine Gefahren ausgehen, wie sie z.B. vorzeitiges oder unkontrolliertes Ablösen des Werkzeugs darstellen. Es ist daher konstruktiv dafür zu sorgen, dass bei eingesetztem Werkzeug noch im Stillstand des Motors und damit vor Einsetzen der Verriegelungswirkung in Folge der Zentrifugalkraft dennoch eine Anfangsverriegelung erfolgt. Diese könnte dadurch erreicht werden, dass der Verriegelungskörper in der Richtung der Zentrifugalkraft vorgespannt ist. Das Anschlussteil muss daher also gegen eine Vorspannkraft in den Hohlwellenansatz eingedrückt werden. Zum einen gibt das beim Einrasten der Anfangsverriegelung auftretende Geräusch dem Bediener die Gewißheit, dass das Werkzeug verriegelt ist. Zum anderen kann durch die Anfangsverriegelung diejenige Position von Anschlussteil und Hohlwellenansatz hergestellt werden, die für eine funktionsgerechte Verriegelung durch die Zentrifugalkraft notwendig ist.

Nach einer vorteilhaften Ausgestaltung der Erfindung könnte die Verriegelungseinrichtung hydraulisch, pneumatisch oder mechanisch vorgespannt sein. Vor allem die Vorspannung mittels einer Feder ermöglicht eine konstruktiv einfache und kostengünstig herstellbare Vorspannvorrichtung.

Die wesentliche Funktion der Kupplungseinrichtung ist es, Kräfte zwischen dem Hohlwellenansatz und dem Anschlussteil zu übertragen. Eine Kraftübertragung zwischen diesen beiden Teilen kann prinzipiell durch Formschluss oder durch Reibschluss geschehen. Nach einer vorteilhaften Ausgestaltung der Erfindung könnte daher vorgesehen sein, dass die Rotationsquerschnitte des Hohlwellenansatzes und des Anschlussteils einander entsprechend ausgeblidet sind, z.B. indem sie als genormte Formschlussverbindung ausgeführt sind, und so eine formschlüssige Kraftübertragung gewährleisten. Derartige Verbindungen, z.B. solche mit Sechskantquerschnitten, sind einfach und kostengünstig herstellbar. Vor allem aber sind sie unempfindlich gegen Axialverschiebungen des Anschlussteils relativ zum Hohlwellenansatz.

Zusätzlich oder alternativ könnte der Hohlwellenansatz einen Innenkonus und das Anschlussteil einen entsprechenden Außenkonus zu gegenseitigen Anlage aufweisen. Diese drehsymmetrischen Querschnitte bieten den Vorteil, dass sie in hoher Präzision hergestellt werden können.

Im Gegensatz zu einer formschlüssigen Verbindung muß auf eine reibschlüssige eine Axialkraft aufgebracht werden, um die kraftübertragenden Flächen in Anlage zu halten. Diese Axialkraft kann manuell beim Einsetzen des Werkzeugs eingebracht und durch eine Presspassung der konischen Teile aufrechterhalten werden. Nach einer vorteilhaften Ausgestaltung könnte eine Schrägfläche am Verriegelungskörper ein Teil der auf den Verriegelungskörper wirkenden Zentrifugalkraft als Axialkraft auf den Werkzeugträger umlenken und auf diese Weise die Presspassung zwischen Anschlußteil und Hohlwellenansatz herstellen. Als Schrägfläche könnte dazu eine schräge Kontaktfläche zwischen Verriegelungskörper und Werkzeugträger dienen. Damit entfiele ein weiterer Arbeitsschritt bei der Montage des Werkzeugträgers.

In einer vorteilhaften Weiterbildung könnten die konischen Flächen des Hohlwellenansatzes und/oder des Anschlussteils zur reibschlüssigen Kraftübertragung, insbesondere mit hoher Oberflächengüte, ausgebildet sein. Durch möglichst glatte Oberflächen der konischen Flächen wird vermieden, dass sie sich aneinander verkeilen und nach Einsatz des Werkzeugträgers nicht oder nur mit erheblichem Aufwand voneinander gelöst werden können.

Prinzipiell ist jedwede Anzahl an Verriegelungskörpern möglich. Da es sich bei der Kupplungseinrichtung um ein schnelldrehendes Teil handelt, ist lediglich darauf zu achten, dass durch die Verriegelungskörper keine unerwünschten Unwuchten erzeugt werden. Es wird daher zumindest beim Einsatz nur eines Verriegelungskörpers ein nicht unerheblicher Aufwand für das Auswuchten der Kupplungseinrichtung notwendig. Daher könnten nach einer vorteilhaften Ausgestaltung zwei Verriegelungskörper vorgesehen sein, die sich bezüglich der Rotationsachse radial gegenüberliegen. Bei gleichen Massen für beide Verriegelungskörper könnte so eine ausgeglichene Massenverteilung unter Vermeidung von Unwuchten erreicht werden.

Eine ausgeglichene Massenverteilung könnte nach einer weiteren vorteilhaften Ausgestaltung auch dadurch sichergestellt werden, dass die Verriegelungskörper als im Wesentlichen baugleiche Teile ausgebildet sind. Liegen die Verriegelungskörper alternativ dazu oder zusätzlich in derselben Ebene orthogonal zur Rotationsachse der Welle, könnten außerdem auch Biegewechselspannungen an der Welle und unnötige Belastungen der Lagerung der Welle vermieden werden.

Prinzipiell ist es unbedeutend, ob die Verriegelungseinrichtung nun am Anschlussteil oder an dem Hohlwellenansatz ausgebildet ist. Beide Bauarten bieten spezielle Vorteile. So könnte in einer Ausgestaltungsform der Verriegelungskörper im Anschlussteil angeordnet sein und in eine Ausnehmung im Hohlwellenansatz greifen. Die freie und ungenutzte Außenfläche des Hohlwellenansatzes ließe sich dabei zum Beispiel als Ansatz für Werkzeuge nutzen, wodurch eine sehr kompakte Bauform für die Kupplungseinrichtung erzielt werden kann.

Nach einer alternativen Ausgestaltungsform könnte der Verriegelungskörper auch durch einen Durchbruch im Hohlwellenansatz hindurch auf das Anschlussteil greifen. Auf diese Weise wäre eine besonders gute Zugänglichkeit der Verriegelungskörper erreicht, die die Wartung der Kupplungseinrichtung wesentlich vereinfacht.

Für beide Alternativen sind verschiedene Verriegelungsmechanismen vorstellbar, die alle dem Prinzip folgen, einen Abschnitt am Verriegelungskörper in eine Ausnehmung am Anschlußteil in einer Einschubrichtung orthogonal zur der zu blockierenden Richtung einzuschieben und so eine Arretierung des Anschlussteils in axialer Richtung zu bewerkstelligen. Nach einer vorteilhaften Ausgestaltung könnte dazu ein Verriegelungskörper vorgesehen sein, der eine Öffnung aufweist, durch die das Anschlussteil zur Verriegelung hindurchsteckbar ist. Der Verriegelungskörper könnte das Anschlußteil in Verriegelungsstellung dabei entweder hakenförmig umgreifen oder ringförmig umschließen. Auf diese Weise ist eine möglichst große Kontaktfläche zwischen Verriegelungskörper und Anschlussteil erreicht, die eine günstige Kraftverteilung bewirkt.

Nach einer besonders vorteilhaften Ausgestaltung könnten zwei Verriegelungskörper angeordnet sein, die gemeinsam eine Öffnung zur Aufnahme des Anschlussteils bilden. Dadurch wäre das Anschlussteil im Verriegelungszustand allseits umschlossen, was eine besonders sichere Verriegelung bedeuten würde.

In einer besonders zu bevorzugenden Ausgestaltung könnte vorgesehen sein, dass sich die Verriegelungskörper im Bereich der Öffnung zumindest teilweise gegenseitig durchdringen. Eine derartige Bauform ermöglicht es, die Verriegelungskörper bzw. ihre Schwerpunkte in derselben Ebene orthogonal zur Rotationsachse anzuordnen. Damit tritt keine Biegewechselspannung am Hohlwellenansatz auf, die eine Taumelbewegung erzeugen und vor allem bei schneller Rotation die Lagerung der Welle erheblich belasten könnte. Außerdem umschließen die Verriegelungskörper das Anschlussteil ebenfalls in derselben Ebene. Damit liegen auch die Krafteinleitungsflächen am Anschlußteil in derselben Ebene, so dass auch auf dieses keine Biegewechselspannung ausgeübt und keine Taumelbewegung induziert wird.

Die Betriebssicherheit erfordert es u.a., dass die Werkzeugmaschinen auch bei Drehung ohne eingesetztes Werkzeug keine Gefahrenquelle darstellen. Um zu vermeiden, dass die Verriegelungskörper in nichtverriegeltem Zustand aus dem Durchbruch im Hohlwellenansatz herausgeschleudert werden, könnte nach einer weiteren vorteilhaften Ausgestaltung ein Halteelement, zum Beispiel ein außerhalb der Hohlwelle verlaufender Ring, vorgesehen sein, der die Verriegelungskörper entgegen der Wirkungsrichtung der Zentrifugalkraft festhält. Neben dem Sicherheitsaspekt könnte ein derartiges Halteelement außerdem die Funktion übernehmen, die Fliehkraftwirkung auf das Anschlussteil und die Verriegelungskörper zu begrenzen, in dem es einen Teil der Fliehkraft aufnimmt.

Nach einer weiteren vorteilhaften Ausgestaltung könnte sich der Verriegelungskörper durch eine vorgespannte Feder an dem Halteelement abstützen. Das Halteelement könnte also außerdem dazu dienen, als Wiederlager für eine Druckfeder, die für eine Anfangsverriegelung sorgen könnte, zu fungieren.

Eine vorteilhafte Weiterbildung könnte dazu vorsehen, dass die Verriegelungskörper in der Richtung der Zentrifugalkraft zur Aufnahme einer dem jeweils anderen Verriegelungskörper zugeordneten Vorspannfeder durchbohrt sind. Die Bohrung durch den Verriegelungskörper könnte somit zugleich als Aufnahme und Führung für eine Druckfeder zur Vorspannung des jeweils anderen Verriegelungskörpers dienen. Damit wäre eine besonders einfache und kompakte Bauform erreicht.

Prinzipiell ist jede Gestaltungsform des Anschlussteils denkbar, die es ermöglicht, dass die Verriegelungskörper am Anschlussteil eingreifen können. Nach einer besonders vorteilhaften Ausgestaltung könnte das Anschlußteil eine im Wesentlichen umfänglich verlaufende Verjüngung, Einschnürung, Hinterschneidung oder dergleichen für den Eingriff eines Verriegelungskörpers aufweisen. Eine solche Ausführungsform ist wie auch das übrige Anschlussteil rotationssymmetrisch und daher besonders einfach und kostengünstig herzustellen.

Da Werkzeugmaschinen mit schnelldrehenden Werkzeugen eine besonders hohes Gefahrenpotenzial aufweisen, ist es sinnvoll, weitere Sicherheitsvorrichtungen vorzusehen, die von der bisher beschriebenen Verriegelungsvorrichtung unabhängig wirken. Dazu könnte nach einer vorteilhaften Weiterbildung der Erfindung ein Werkzeugträger vorgesehen sein, der auf der dem Motor abgewandten Seite eine rotationssymmetrisch umlaufende Verjüngung, Nut, Hinterschneidung oder dergleichen aufweist, in die eine an einem festen Widerlager, z.B. einem Gehäuse des Motors, entfernbar angeordnete Sicherheitseinrichtung zur Verhinderung einer axialen Relativbewegung des Werkzeugträgers greift. Damit wäre selbst bei Versagen der Verriegelungseinrichtung eine ungewolltes Lösen des Werkzeugträger von der Welle ausgeschlossen.

Nach einer besonders vorteilhaften Ausgestaltung könnte vorgesehen sein, dass die Sicherheitseinrichtung in die Verjüngung etc. in der Verriegelungsstellung berührungsfrei eingreift. Ohne Kontakt zwischen Werkzeugträger und Sicherheitseinrichtung wäre eine Geräuschentwicklung und ein Heißlaufen des Werkzeugträgers infolge der sonst starken Reibung zwischen dem schnellrotierenden Werkzeugträger und der feststehenden Sicherheitseinrichtung wirksam vermieden.

Bei Versagen der Verriegelungseinrichtung kommt es in aller Regel zu einer Axialbewegung des Werkzeugträgers aus dem Hohlwellenansatz heraus und damit zum Kontakt zwischen der Sicherheitseinrichtung und dem Werkzeugträger. Bei einer weiteren vorteilhaften Weiterbildung könnte vorgesehen sein, dass bei einem Kontakt der Sicherheitseinrichtung mit dem Werkzeugträger ein Signal abgebbar und/oder der Motor blockiert und/oder abgeschaltet ist. Das Signal könnte ein optisches oder ein akustisches Warnsignal bewirken oder dazu führen, dass die Welle abgebremst oder die Energiezufuhr des Motors abgeschaltet wird. Auf diese Weise ist eine Sicherheitseinrichtung geschaffen, die bei Versagen der Verriegelungseinrichtung größtmöglichen Schutz bietet, weil sie selbsttätig entweder vor einer Gefahrenquelle warnt oder diese ausschaltet.

Ein Elektromotor zum Antrieb eines rotierend betriebenen Werkzeugs könnte dahingehend vorteilhaft weitergebildet sein, dass an dem abtriebbseitigen Ende seiner Welle eine erfindungsgemäße Kupplungseinrichtung angeordnet ist.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche, andererseits auf die nachfolgende Erläuterung eines bevorzugten Ausführungsbeispiels der Erfindung anhand der Zeichnung zu verweisen. In Verbindung mit der Erläuterung des Ausführungsbeispiels der Erfindung anhand der Zeichnung werden auch im Allgemeinen bevorzugte Ausgestaltungen und Weiterbildungen der Lehre erläutert. In der Zeichnung zeigt
- Fig. 1: eine Seitenansicht eines Elektromotors mit einer erfindungsgemäßen Kupplungseinrichtung und einem nichtgekuppelten Werkzeugträger,
- Fig. 2: zwei Seitenansichten eines Verriegelungskörpers,
- Fig. 3: einen Längsschnitt durch einen Verriegelungskörper,
- Fig. 4: zwei Verriegelungskörper in Verriegelungsstellung und
- Fig. 5: einen Werkzeugträger mit einer Sicherheitseinrichtung.

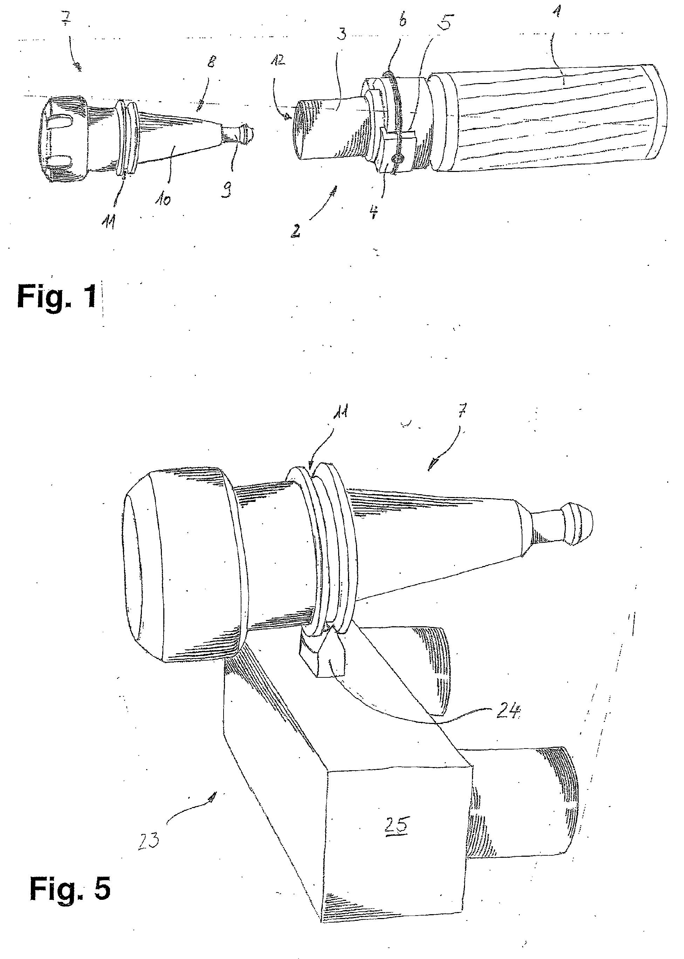

Fig. 1 zeigt einen Motor 1 einer Werkzeugmaschine mit einer Welle 2, auf deren abtriebsseitigen Ende sich ein Hohlwellenansatz 3 mit zwei Verriegelungskörpern 4 - einer davon verdeckt - und einem Innenkonus 12 befindet. Die Verriegelungskörper 4 sind radial verschieblich in einem Durchbruch 5 im Hohlwellenansatz 3 angeordnet und werden von einem Ring 6 gehalten.

In den Hohlwellenansatz 3 lässt sich ein Werkzeugträger 7 mit einem Anschlussteil 8 einschieben. Das Anschlussteil 8 untergliedert sich seinerseits in einen Verriegelungskopf 9, einen Konus 10 und eine Ringnut 11.

Zur Kupplung des Werkzeugträgers 7 an den Motor 1 wird das Anschlussteil 8 in den Innenkonus 12 des Hohlwellenansatzes 3 eingeschoben. Dabei kommt der Verriegelungskopf 9 im Bereich der Verriegelungskörper 4 zu liegen. Wird nun der Hohlwellenansatz 3 durch vom Motor 1 in Rotation versetzt, so streben die Verriegelungskörper 4 infolge der auf sie wirkenden Zentrifugalkraft radial nach außen und greifen am Verriegelungskopf 9 in den Werkzeugträger 7 ein. In dieser Lage kommen der Konus 10 des Werkzeugträgers 7 und der Innenkonus 12 des Hohlwellenansatzes 3 zur gegenseitigen Anlage und stellen damit Reibschluss zur Kraftübertragung her.

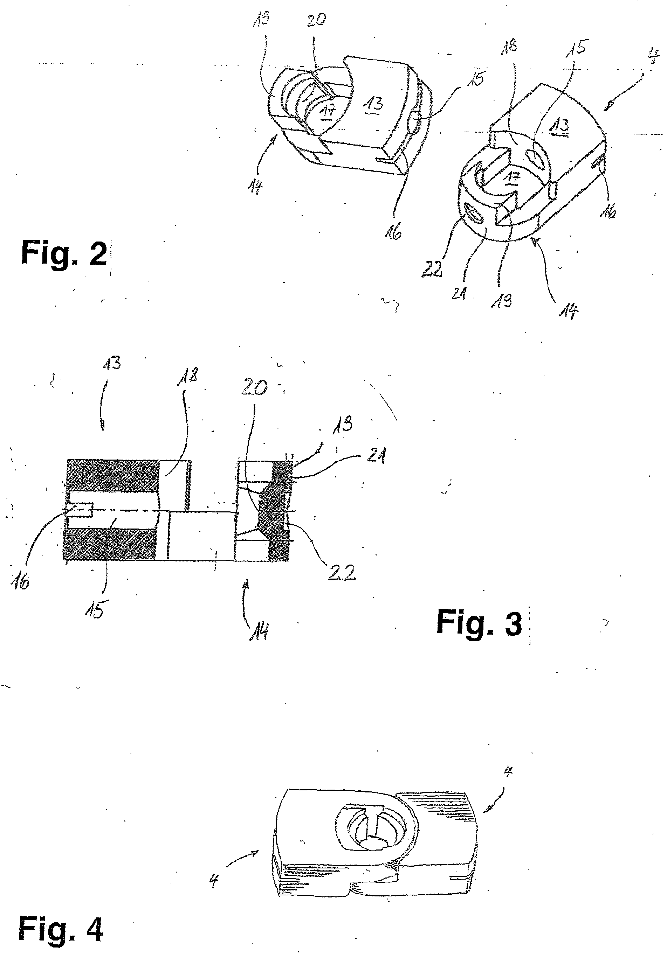

Fig. 2 zeigt einen Verriegelungskörper 4 in zwei unterschiedlichen Ansichten. Er besteht im wesentlichen aus einem gewichtsmäßig schweren Massekörper 13 und einem demgegenüber leichten und ringförmigen Durchbruchskörper 14. Entlang der Symmetrieachse des Verriegelungskörpers 4 ist der Massekörper 13 von einer Bohrung 15 durchzogen. In diese und in eine schmale Außenseite des Massekörpers 13 eingeschnitten verläuft eine Nut 16.

Der Durchbruchskörper 14 weist einen Durchbruch 17 auf, der im Wesentlichen von einer Innenseite 18 des Massekörpers 13 und einer Klaue 19 begrenzt wird. Die Klaue 19 ihrerseits weist auf ihrer dem Durchbruch 17 zugewandten Seite eine Anlagefläche 20 auf, die speziell für den Eingriff in den Verriegelungskopf 9 des Werkzeugträgers 7 ausgebildet ist. Auf der der Anlagefläche 20 gegenüberliegenden Außenseite der Klaue 19 befindet sich wiederum in der Symmetrieachse des Verriegelungskörpers 4 eine Vertiefung 22, die ihrer Lage und ihrem Durchmesser nach der Bohrung 15 entspricht. Diese Gestaltung des Verriegelungskörpers 4, und hier besonders die Gestaltung der Oberfläche der Anlagefläche 20, ist in der Schnittdarstellung des Verriegelungskörpers 4 in der Fig. 3 deutlich zu erkennen.

Diese besondere Ausgestaltung der Verriegelungskörper 4 ermöglicht es, dass sie in derselben Ebene orthogonal zur Rotationsachse des Hohlwellenansatzes 3 einander gegenüberliegend angeordnet werden können. Dazu liegen zwei Verriegelungskörper derart aufeinander, dass die Klaue 19 eines Verriegelungskörpers in den Durchbruch 17 des jeweils anderen Verriegelungskörpers 4 so eingreift, dass seine Außenseite 21 der Innenseite 18 des Massekörpers 13 des jeweils anderen Verriegelungskörpers 4 zugewandt ist. Gemeinsam bilden die beiden Verriegelungskörper 4 so eine Öffnung zur Aufnahme des Anschlussteils 8. Sie ist deutlich erkennbar in Fig. 4, die die gegenseitige Zuordnung der Verriegelungskörper 4 in Verriegelungsstellung, aber außerhalb des Hohlwellenansatzes 3, darstellt.

Weil die Verriegelungskörper 4 als baugleiche Teile ausgebildet sind, sich bezüglich der Rotationsachse des Hohlwellenansatzes 3 radial gegenüber und aufgrund der gegenseitigen Durchdringung in der selben Ebene orthogonal zur Rotationsachse des Hohlwellenansatzes 3 liegen, sind Unwuchten in Folge der Verriegelungskörper 4 nahezu ausgeschlossen und der Aufwand für das Auswuchten der rotierenden Teile auf der Welle 2 wirksam minimiert.

In der Bohrung 15 beider Verriegelungskörper 4 ist jeweils eine nicht dargestellte Druckfeder angeordnet, die sich einerseits an dem durch die Nut 16 verlaufenden Ring 6 und andererseits in der Vertiefung 22 des jeweils anderen Verriegelungskörpers 4 abstützt. Die Federn wirken in der Richtung der Zentrifugalkraft. Sie drücken die Verriegelungskörper 4 auseinander, die jeweiligen Klauen 19 also zusammen und sorgen somit für eine vorgespannte Ausgangsstellung. Soll nun ein Anschlussteil 8 in der Hohlwellenaufnahme 3 gekuppelt werden, so muß es zunächst die Klauen 19 gegen die Federkraft auseinanderdrücken. Dazu ist der Verriegelungskopf 9 kegelstumpfförmig ausgebildet und die Anlagefläche 20 mit einer entsprechenden Abschrägung ausgestattet. Ist die Federkraft überwunden, so schnappen die Klauen 19 der Verriegelungskörper 4 hörbar hinter den Verriegelungskopf 9. Das Einschnappgeräusch gibt dem Bediener des Anschußteils 8 den Hinweis, dass die Anfangsverriegelung erfolgt ist und der Werkzeugträger 7 sicher gekuppelt ist. Jetzt umschließen die Klauen 19 den Verriegelungskopf 9 des Anschlussteil 8 nahezu vollständig. Damit ist die für eine zuverlässige Verriegelung während des Einsatzes erforderliche Lage von Anschlußteil 8 und Hohlwellenansatz 3 zueinander hergestellt.

Wird nun die Kupplungseinrichtung in Drehung versetzt, so streben die jeweiligen Massekörper 13 auseinander und dabei die jeweiligen Klauen 19 bzw. ihre Anlageflächen 20 aufeinander zu. Auf diese Weise wird der Verriegelungskopf 9 des Anschlussteils 8 am Werkzeugträger 7 unverrückbar zwischen den Klauen 19 der Verriegelungskörper 4 gehalten.

Fig. 5 zeigt eine Sicherheitseinrichtung 23 für den Werkzeugträger 7. Sie besteht im Wesentlichen aus einem Kamm 24, der auf einem Halter 25 angeordnet ist. Der Halter 25 ist wiederum entfernbar an einem nicht dargestellten festen Widerlager, z. B. dem Motorgehäuse oder einer gemeinsamen Grundplatte von Motor 1 und Halter 25 angeordnet. Nach Einsetzen des Werkzeugträgers 7 in den Hohlwellenansatz 3 wird nun die Sicherheitseinrichtung 23 derart montiert, dass der Kamm 24 in die Ringnut 11 am Werkzeugträger 7 eingreift. Auf diese Weise ist sichergestellt, dass bei einem Versagen der Kupplungseinrichtung der Werkzeugträger 7 nicht aus dem Hohlwellenansatz 3 entfernt werden kann, weil die Sicherheitseinrichtung 23 dies blockiert.

Außerdem können mit der Sicherheitseinrichtung 23 weitere Funktionen verbunden werden: Ist die Sicherheitseinrichtung 23 so eingestellt, dass der Kamm 24 berührungsfrei in der Ringnut 11 läuft, so kann bei mechanischem Kontakt zwischen Kamm 24 und Ringnut 11 ein elektrisches Signal abgegeben werden, das entweder eine Warnlampe zum Leuchten bringt oder ein akustisches Warnsignal abgibt. Damit ist der Bediener der Werkzeugmaschine gewarnt, dass die Kupplungseinrichtung versagt, und sich der Werkzeugträger 7 aus der Verriegelung gelöst hat. Das elektrische Signal kann außerdem dazu verwendet werden, dass die Energiezufuhr des Motors 1 unterbrochen und die Drehbewegung der Welle 2 sofort abgebremst bzw. blockiert wird, so dass von dem gelösten Werkzeugträger 7 keine Gefahr mehr ausgeht.

## Patentansprüche

1. Kupplungseinrichtung zur drehfesten Kupplung eines auswechselbaren Werkzeugträgers (7) an der Welle (2) eines Motors (1), wobei die Welle (2) an ihrem abtriebsseitigen Ende einen Hohlwellenansatz (3) zur Aufnahme des Werkzeugträgers (7) aufweist oder der Werkzeugträger einen Hohlwellenansatz zur Aufnahme des abtriebsseitigen Endes der Welle aufweist und wobei die Welle (2) und/oder der Werkzeugträger eine Verriegelungseinrichtung zur Sicherung des Werkzeugträgers (7) aufweist,
**dadurch gekennzeichnet, dass** die Verriegelungseinrichtung zentrifugalkraftbetätigt ist.

2. Kupplungseinrichtung nach Anspruch 1, **dadurch gekennzeichnet, dass** die Verriegelungseinrichtung mindestens einen Verriegelungskörper (4) umfaßt, der infolge der beim Drehen auftretenden Zentrifugalkräfte mit einem Anschlußteil (8) am Werkzeugträger (7) und/oder an der Welle (2) in arretierenden Eingriff bringbar ist, wobei der Verriegelungskörper (4) in der Richtung der Zentrifugalkraft hydraulisch, pneumatisch oder mechanisch vorgespannt sein kann.

3. Kupplungseinrichtung nach Anspruch 2, **dadurch gekennzeichnet, dass** die Rotationsquerschnitte des Hohlwellenansatzes (3) und des Anschlußteils (8) zur formschlüssigen Kraftübertragung einander entsprechend ausgebildet sind.

4. Kupplungseinrichtung nach Anspruch 2 oder 3, **dadurch gekennzeichnet, dass** der Hohlwellenansatz (3) einen Innenkonus (12) und das Anschlußteil (8) einen entsprechenden Außenkonus (10) zu gegenseitigen Anlage aufweisen, wobei eine Schrägfläche am Verriegelungskörper (4) ein Teil der auf ihn wirkenden Zentrifugalkraft als Axialkraft auf den Werkzeugträger (7) umlenken kann und wobei die konischen Flächen des Hohlwellenansatzes (3) und des Anschlußteils (8) zur reibschlüssigen Kraftübertragung ausgebildet sein können.

5. Kupplungseinrichtung nach einem der Ansprüche 2 bis 4, **dadurch gekennzeichnet, dass** zwei sich radial gegenüberliegende Verriegelungskörper (4) vorgesehen sind, wobei die Verriegelungskörper (4) im Wesentlichen als baugleiche Teile ausgebildet sein können und/oder in einer Ebene orthogonal zur Rotationsachse der Welle (2) liegen können.

6. Kupplungseinrichtung nach einem der Ansprüche 2 bis 5, **dadurch gekennzeichnet, dass** der Verriegelungskörper im Anschlußteil angeordnet ist und in eine Ausnehmung am Hohlwellenansatz greift, oder dass der Verriegelungskörper (4) durch einen Durchbruch (5) im Hohlwellenansatz (3) hindurch auf das Anschlußteil (8) greift und/oder dass der Verriegelungskörper (4) eine Öffnung (17) aufweist, durch die das Anschlußteil (8) hindurchsteckbar ist, wobei zwei Verriegelungskörper (4) vorgesehen sein können, die vorzugsweise gemeinsam eine Öffnung zur Aufnahme des Anschlußteils (8) bilden und ggf. sich im Bereich der Öffnung (17) zumindest teilweise gegenseitig durchdringen.

7. Kupplungseinrichtung nach einem der Ansprüche 2 bis 6, **dadurch gekennzeichnet, dass** ein Halteelement (6), vorzugsweise ein außerhalb der Hohlwellenansatzes (3) angeordneter Ring, den Verriegelungskörper (4) entgegen der Richtung der Zentrifugalkraft festhält.

8. Kupplungseinrichtung nach einem der Ansprüche 2 bis 7, **dadurch gekennzeichnet, dass** sich der Verriegelungskörper (4) durch eine vorgespannte Feder an dem Halteelement (6) abstützt, wobei zwei Verriegelungskörper (4) vorgesehen sein können, die in der Richtung der Zentrifugalkraft zur Aufnahme einer dem jeweils anderen Verriegelungskörper (4) zugeordneten Vorspannfeder durchbohrt sein können.

9. Kupplungseinrichtung nach einem der Ansprüche 2 bis 8, **dadurch gekennzeichnet, dass** das Anschlußteil (8) eine im Wesentlichen umfänglich verlaufende Einschnürung, Hinterschneidung oder Nut für den Eingriff des Verriegelungskörpers (4) aufweist.

10. Kupplungseinrichtung nach einem der Ansprüche 1 bis 9, **dadurch gekennzeichnet, dass** der Werkzeugträger (7) auf der dem Motor abgewandten Seite eine rotationssymmetrisch umlaufende Verjüngung, Nut (11), Hinterschneidung oder dergleichen aufweist, in die eine an einem festen Widerlager entfernbar angeordnete Sicherheitseinrichtung (23) zur Verhinderung einer axialen Relativbewegung des Werkzeugträgers (7) greift, wobei die Sicherheitseinrichtung (23) in die Verjüngung etc. in der Verriegelungsstellung berührungsfrei eingreifen kann und ggf. bei einem Kontakt der Sicherheitseinrichtung (23) mit dem Werkzeugträger (7) ein Signal abgebbar und/oder der Motor (1) blockiert und/oder abgeschaltet sein kann.

11. Elektromotor (1) zum Antrieb eines rotierenden Werkzeugs, **dadurch gekennzeichnet, dass** am abtriebsseitigen Ende seiner Welle (2) eine Kupplungseinrichtung nach einem der Ansprüche 1 bis 10 angeordnet ist.
